# EUROPEAN PATENT SPECIFICATION

(11) **EP 1 900 063 B1**
(45) Date of publication and mention of the grant of the patent: **05.09.2018**
(21) Application number: 05757064.0
(22) Date of filing: 04.07.2005
(51) Int. Cl.: H01Q 25/00, H01Q 13/20, H01Q 21/06, H04B 7/155, H01Q 21/08

(54) **AN IMPROVED REPEATER ANTENNA FOR USE IN POINT-TO-POINT APPLICATIONS**
VERBESSERTE REPEATER-ANTENNE ZUR VERWENDUNG IN PUNKT-ZU-PUNKT-ANWENDUNGEN
ANTENNE AMÉLIORÉE DE RÉPÉTEUR À UTILISER DANS DES APPLICATIONS POINT À POINT

(43) Date of publication of application: 19.03.2008
(73) Proprietor: Telefonaktiebolaget LM Ericsson (publ), 164 83 Stockholm (SE)
(72) Inventor: ANDERSSON, Mats, S-417 19 Göteborg (SE); HALLBJÖRNER, Paul, 43132 Göteborg (SE); RYDBERG, Anders, S-752 27 Uppsala (SE)
(74) Representative: Ericsson
(86) International application number: PCT/SE2005/001083
(87) International publication number: WO 2007/004932

(56) References cited:
- EP-A1- 0 086 558
- EP-A1- 0 479 696
- EP-A2- 0 104 536
- EP-A2- 1 538 762
- WO-A1-88/02934
- FR-A1- 2 766 995
- JP-A- 2005 020 368
- US-A- 4 677 440
- US-A- 5 210 541
- US-A1- 2005 057 421
- HEIDRICH E ET AL: "Design considerations for comb line microstrip travelling wave antennas", PROCEEDINGS OF THE ANTENNAS AND PROPAGATION SOCIETY INTERNATIONAL SYMPOSIUM (APSIS). CHICAGO, JULY 20 - 24, 1992; [PROCEEDINGS OF THE ANTENNAS AND PROPAGATION SOCIETY INTERNATIONAL SYMPOSIUM (APSIS)], NEW YORK, IEEE, US, vol. -, 18 July 1992 (1992-07-18), pages 1443-1446, XP010066094, DOI: 10.1109/APS.1992.221621 ISBN: 978-0-7803-0730-8

## Description

### TECHNICAL FIELD

The invention discloses a repeater antenna for use in point-to-point applications in telecommunications systems in the microwave range, the repeater antenna being intended for connecting transmissions from a first radio unit at a first site to a second radio unit at a second site.

### BACKGROUND ART

In telecommunications systems such as, for example, cellular telephony systems in the microwave range, there can be a number of problems for a base station when trying to communicate with the users located in the area covered by the base station. In urban areas, examples of such problems can be high rise building which obstruct the line of sight to certain sub-areas, or that in certain sub-areas the concentration of users can exceed that which can be handled by the base station.

One way of handling these problems is to install other base stations which can cover the sub-areas in question, usually base stations with smaller capacity, so called "pico-stations". These "pico-stations" then need to be connected to the network in some way, suitably with the pico-station as one of the points in a point-to-point connection. Since the sub-area in question usually would not have Line of Sigh (LOS) to the base station, said point-to-point connection could be made by means of a repeater station, which would be directed at the "pico-station" from the base station, or from a higher level in the network.

Conventional repeater antennas are usually designed by means of two reflector antennas, often parabolic dishes, connected by means of a waveguide and pointed in different directions. Installing such repeaters, especially in urban areas, is becoming increasingly difficult, due to a number of factors such as aesthetic considerations and difficulties in finding sufficient space for a repeater site.

Another kind of previously known repeater is merely a large sheet of reflective material, such as metal. Such a repeater would suffer from a number of drawbacks, for example high losses due to low directivity, and would generally not be suitable for use in urban areas.

Yet another kind of previously known repeater is an active repeater, which uses amplification between the input and output antennas. An example is shown in document FR 2 766 995 A1.

### DISCLOSURE OF THE INVENTION

As described above, there is thus a need for a repeater antenna in a point-to-point telecommunications system which would overcome the previously described drawbacks of known repeater antennas.

This need is addressed by the invention in that it discloses a repeater antenna for use in point-to-point applications in telecommunications systems in the microwave range, intended for connecting transmissions from a first radio unit at a first site to a second radio unit at a second site.

The repeater antenna it is essentially plane, and is designed as a plurality of travelling wave antennas with at least a first and a second antenna beam, which means that the first beam can be used for transmissions to and from a first radio unit, for example a base station, and the second beam can be used for transmissions to and from a second radio unit, suitably a "pico station".

In one embodiment, the repeater antenna comprises antenna elements which are created on a sheet of electrically conducting material, the repeater antenna additionally comprising a ground plane spaced apart from the antenna elements by means of a dielectric material.

### BRIEF DESCRIPTION OF THE DRAWINGS

The invention will be described in more detail in the following description, with reference to the appended drawings, in which
Fig 1 shows a schematic overview of the system in which the invention may be applied, and
Figs 2-6 show different embodiments of the repeater antenna of the invention.

### EMBODIMENTS OF THE INVENTION

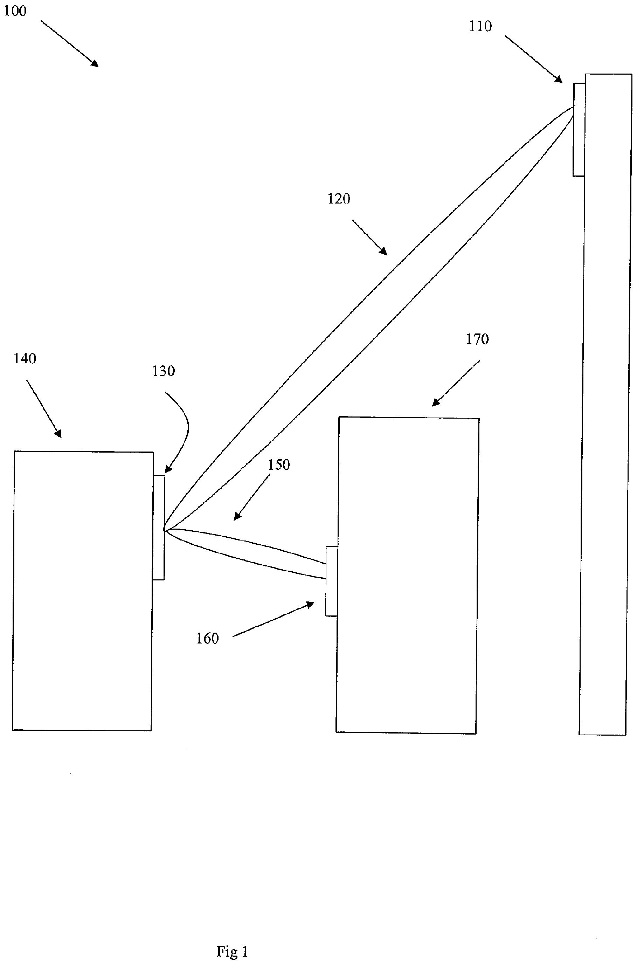

Fig 1 shows a system 100 in which a repeater antenna of the invention may be used. The system 100 shown is a cellular telephony system, which should be seen merely as an example of an embodiment intended to facilitate the explanation of the invention, the repeater antenna can be used in a wide variety of other applications, as will be realized by those skilled in the field.

A first radio unit 110, in this case a radio base station in the cellular system 100, is unable to provide adequate service to an area in its cell, since a building 170 obscures the area from radio coverage by the base station 110.

In order to service the obscured area, a second radio unit or base station 160 has been deployed on the building 170, so that the antenna of the station 160 can cover the obscured area. The second radio unit 160 may be a base station similar to the base station 110, but it can also be a base station with a reduced capacity compared to the base station 110, a so called "pico station".

In order to connect the first radio unit 110 to the second radio unit 160, a repeater antenna 130 of the invention has been deployed on a building 140 in a position where it may connect the base station 110 to the pico station 160.

In order to give the operator of the system 100 the possibility of deploying the repeater antenna 130 in a wide variety of places without causing too much aesthetic damage, the repeater antenna 130 is essentially plane, and may thus easily blend into the background, especially if covered by a suitable radome.

The repeater antenna 130 has a first 120 and a second 150 antenna beam, by means of which both the base stations 110, 160 may be covered.

As indicated in fig 1, the first beam 120 is used to connect the repeater antenna 130 to the base station 110, in other words the first beam is used for transmissions between the repeater 130 and the base station 110, and the second beam 150 of the repeater 130 is used to connect the repeater antenna 130 to the base station 160, in other words the second beam is used for transmissions between the repeater 130 and the "pico" station 160.

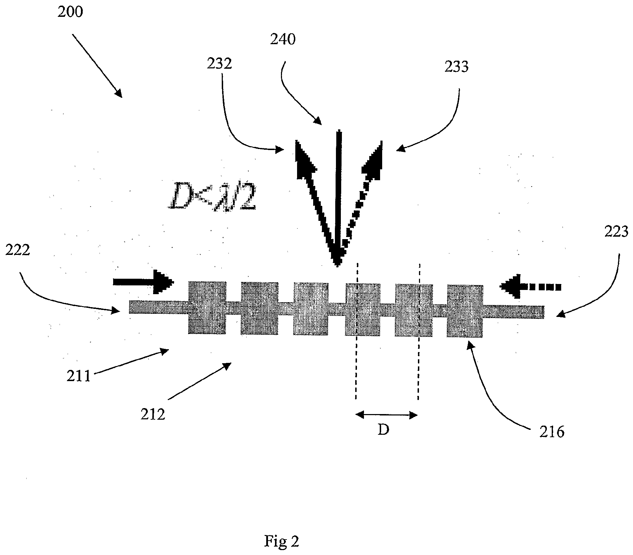

The design of the repeater antenna 130 as well as some variations of said design will now be described with reference to figs 2-6.

Fig 2 shows an example of the antenna 200 which is used in the invention as a base element to form the plurality of travelling wave antennas. The antenna 200 is an array antenna of the so called "travelling wave" type, with at least a first 211 and a second 212 radiation element, which are arranged serially at a centre distance D from each other. Since the radiation elements are connected serially to each other, there will be a first 211 and a second "end element" to which are attached input/output ports 222, 223, of the antenna 200.

As shown in fig 2, the antenna 200 has a first and a second antenna beam 232, 233, each of which is associated with one of the antenna ports 222, 223. This means that the first beam 232 may be used by accessing the first port 222, and in a similar way the second beam 233 is associated with the second port 223. The angle between the beams is determined by the centre distance D between the antenna elements of the antenna.

As can also be seen in fig 2, the two antenna beams of the travelling wave antenna are each other's "mirror image" with respect to an imagined line which extends in a direction perpendicular to the antenna. Thus, the two beams are sometimes referred to as the "plus" or the "minus"-directions.

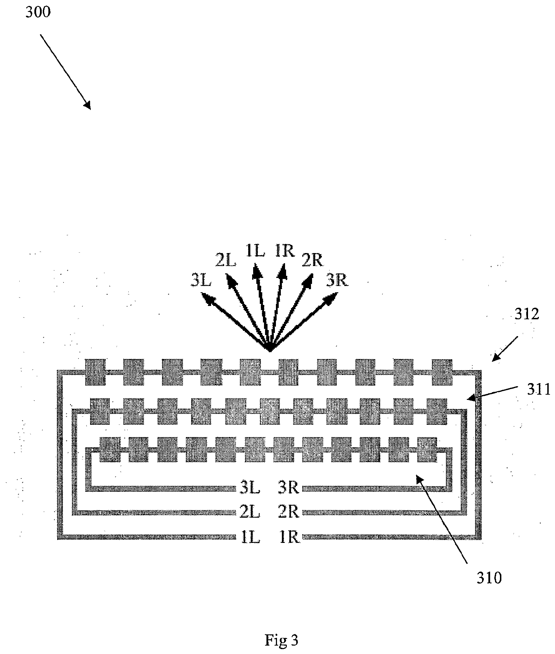

Fig 3 shows the plurality of travelling wave antennas 300 of the invention. In this version, the antenna 300 is comprised of a plurality of travelling wave antennas of the kind shown and described in connection to fig 2. In fig 3, three antennas 310, 311, 312, are shown, although the number of antennas may naturally be varied rather freely.

In accordance with the principle described earlier, the use of three travelling wave antennas will result in six different antenna beams 3L - 3R, each beam being associated with one of six different antenna ports 331-337.

If the antenna 300 is to be used in so called MIMO applications, this may be carried out in the following manner: A MIMO (Multiple Input Multiple Output) system transmits N data streams on an antenna having M beams, with M ≥ 2N, with a suitable degree of decorrelation between the different antenna beams. One MIMO beam may be received in each one of the M antenna beams, and retransmitted in another of the antenna beams, with the decorrelation between the MIMO data streams being retained upon retransmission, due to the antenna being designed and used so that there is sufficient decorrelation between the antenna beams which are used for reception and retransmission respectively.

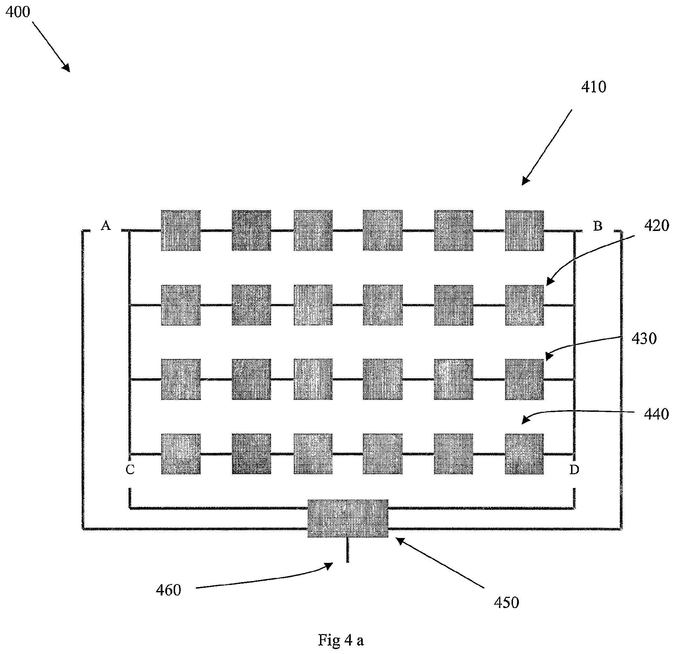

In fig 4a, an alterative version of the antenna 400 according to the invention is shown. The main difference between the antenna 400 and the antenna 300 shown in fig 3 is that the antenna 300 comprises three one-dimensional travelling wave antennas, by means of which six beams (two from each antenna) can be created, all of which are in the same elevational plane.

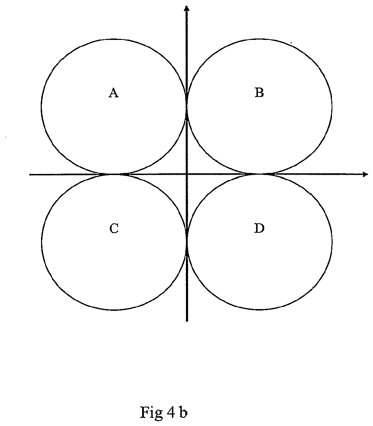

As opposed to the antenna 300, the antenna 400 in fig 4 comprises a plurality 410-440 of one-dimensional travelling wave arrays which are also interconnected at their respective ends, thus creating a two dimensional array antenna. The two-dimensional array antenna is a well known concept to those skilled in the art, so it will not be described in detail here. However, as shown in fig 4, the antenna 400 comprises a switching unit 450 and a connection point 460. A data stream which is connected to the antenna at 460 may by means of the switching unit be connected to any of the points A, B, C, or D indicated in fig 4.

In fig 4b, the four different antenna beams which will be created when connecting to each of the respective points A, B, C, D, are shown. These beams are shown in the same plane as the antenna in fig 4a, i.e. in a plane which is "face-on" with respect to the paper.

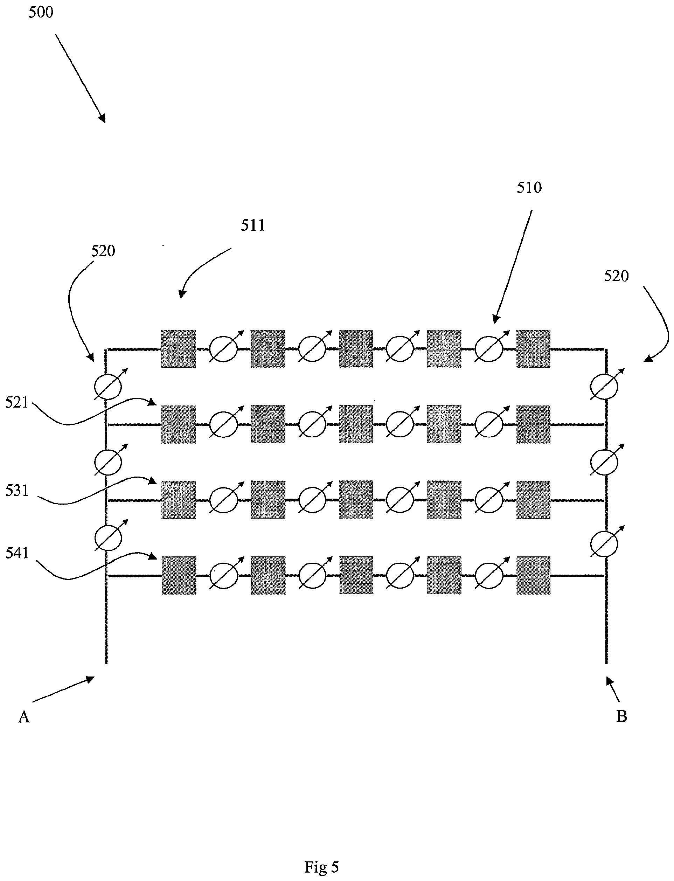

In fig 5, an alternative antenna 500 for use in the invention is shown. The antenna 500 is similar to that shown in fig 4 in that it comprises a plurality 511, 521, 531, 541, of one-dimensional travelling wave arrays which are also interconnected at their respective ends, thus creating a two dimensional array antenna, but in the antenna 500, variable phase shifters 510 are arranged between the radiation elements in the individual arrays, as well as variable phase shifters 520 being arranged on the connections which connect the one-dimensional arrays to each other.

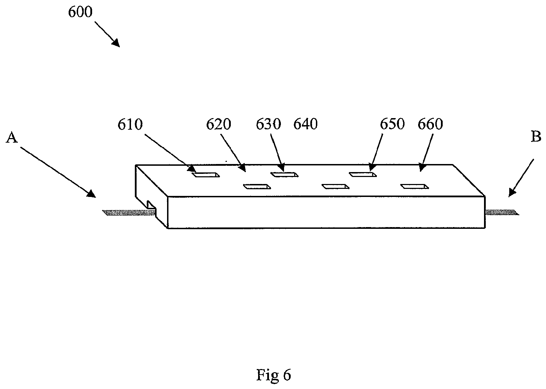

The antenna is fed at two points A and B, both of which are indicated in fig 6, and gives rise to two beams, both of which can be steered by means of the phase shifters adaptively, in a manner which as such is well known , with the phase shifters 510 being used to steer the antenna beams in a first direction, and the phase shifters 520 being used to steer the antenna beams in a second direction which is essentially perpendicular to the first direction.

Connections to the antenna are made via the connection points A and B .

The antenna 500 can also be fed in the four points used with the antenna 400 in fig 4, in which case four beams will be generated.

Naturally, the antenna 500 may be varied, for example in that it doesn't need to comprise all of the phase shifters 510, 520, which are shown in fig 5.

The invention is not limited to the examples of embodiments shown above, but may be freely varied within the scope of the appended patent claims. For example, an antenna which is a travelling wave antenna may be designed in other ways than those shown above, and doesn't necessarily need to comprise resonant elements. A so called leaky cable is one example of a travelling wave antenna without resonant elements.

Fig 6 shows another example of an embodiment 600 of a travelling wave antenna: a waveguide has a number of apertures 610- 660 which will act as radiation elements. In similarity to the antenna 200 shown in fig 2, the antenna 600 is fed at the two end points A and B respectively of the antenna, and creates two beams, in similarity to the antenna 200.

## Claims

1. A point-to-point applications microwave range repeater for use in telecommunications systems, the repeater comprising a repeater antenna (130, 200) connecting transmissions from a first radio unit (110) at a first site to a second radio unit (160) at a second site, said repeater antenna being **characterized in that** it is essentially plane and also essentially flat, and comprising a plurality of travelling wave antennas (310-312), wherein each travelling wave antenna comprises a plurality of radiation elements configured to be serially connected to each other and forming a first (211) and second (216) end element, wherein each first and second end element is configured to be connected to a respective first (222) and second (223) port comprised in each travelling wave antenna, and wherein each travelling wave antenna is associated with a first (120, 1L, 2L, 3L) and a second (150, 1R, 2R, 3R) antenna beam, each of which beams is associated with one of the antenna ports (222, 223), such that the first beam is used by accessing the first port (222), and the second beam is used by accessing the second port (223), so that the first beam (120) can be used for transmissions to and from said first radio unit (110), and the second beam can be used for transmissions to and from said second radio unit (160).

2. The repeater of claim 1, the repeater antenna comprising antenna elements which are created on a sheet of electrically conducting material, the antenna additionally comprising a ground plane spaced apart from the antenna elements by means of a dielectric material.

3. The repeater of any of claims 1-2, wherein the repeater antenna is a passive repeater antenna.

4. The repeater of any of claims 1-2, wherein the repeater antenna is an active repeater antenna.

5. The repeater of any of claims 1-4, the repeater antenna (500) comprising a first plurality of variable phase shifters (510) arranged between the radiation elements of the repeater antenna (500), as well as a second plurality of variable phase shifters (520) arranged in connection to the antenna ports (A, B), the first plurality of phase shifters (510) being configured to steer the antenna beams in a first direction, and the second plurality of phase shifters (520) being configured to steer the antenna beams in a second direction essentially perpendicular to the first direction.

## Patentansprüche

1. Mikrowellenbereich-Repeater für Punkt-zu-Punkt-Anwendungen zur Verwendung in Telekommunikationssystemen, wobei der Repeater eine Repeater-Antenne (130, 200) umfasst, die Übertragungen von einer ersten Funkeinheit (110) an einem ersten Standort zu einer zweiten Funkeinheit (160) an einem zweiten Standort verbindet, wobei die Repeater-Antenne **dadurch gekennzeichnet ist, dass** sie im Wesentlichen eben und außerdem im Wesentlichen flach ist, und eine Vielzahl von Wanderwellenantennen (310-312) umfasst, wobei jede Wanderwellenantenne eine Vielzahl von Strahlungselementen umfasst, die dazu konfiguriert sind, in Reihe miteinander geschaltet zu werden, und ein erstes (211) und zweites (216) Endelement bildet, wobei jedes erste und zweite Endelement dazu konfiguriert ist, mit einem jeweiligen ersten (222) und zweiten (223) Anschluss, die in jeder Wanderwellenantenne enthalten sind, verbunden zu werden, und wobei jede Wanderwellenantenne mit einem ersten (120, 1L, 2L, 3L) und einem zweiten (150, 1R, 2R, 3R) Antennenstrahl verknüpft ist, wobei jeder dieser Strahlen mit einem der Antennenanschlüsse (222, 223) derart verknüpft ist, dass der erste Strahl durch Zugreifen auf den ersten Anschluss (222) verwendet wird und der zweite Strahl durch Zugreifen auf den zweiten Anschluss (223) verwendet wird, sodass der erste Strahl (120) für Übertragungen zu und von der ersten Funkeinheit (110) verwendet werden kann und der zweite Strahl für Übertragungen zu und von der zweiten Funkeinheit (160) verwendet werden kann.

2. Repeater nach Anspruch 1, wobei die Repeater-Antenne Antennenelemente umfasst, die auf einer Schicht aus elektrisch leitendem Material gebildet sind, wobei die Antenne außerdem eine Bodenebene umfasst, die mittels eines Dielektrikums von den Antennenelementen beabstandet ist.

3. Repeater nach einem der Ansprüche 1 bis 2, wobei die Repeater-Antenne eine passive Repeater-Antenne ist.

4. Repeater nach einem der Ansprüche 1 bis 2, wobei die Repeater-Antenne eine aktive Repeater-Antenne ist.

5. Repeater nach einem der Ansprüche 1 bis 4, wobei die Repeater-Antenne (500) eine erste Vielzahl von variablen Phasenschiebern (510), die zwischen den Strahlungselementen der Repeater-Antenne (500) angeordnet sind, sowie eine zweite Vielzahl von variablen Phasenschiebern (520), die in Verbindung zu den Antennenanschlüssen (A, B) angeordnet sind, umfasst, wobei die erste Vielzahl von Phasenschiebern (510) dazu konfiguriert ist, die Antennenstrahlen in eine erste Richtung zu lenken, und die zweite Vielzahl von Phasenschiebern (520) dazu konfiguriert ist, die Antennenstrahlen in eine zweite Richtung, die im Wesentlichen senkrecht zu der ersten Richtung ist, zu lenken.

## Revendications

1. Répéteur d'applications point à point dans la plage des hyperfréquences pour une utilisation dans des systèmes de télécommunications, le répéteur comprenant une antenne de répéteur (130, 200) connectant des transmissions depuis une première unité radio (110) sur un premier site à une deuxième unité radio (160) sur un deuxième site, ladite antenne de répéteur étant **caractérisée en ce qu'**elle est essentiellement plane et également essentiellement plate, et comprenant une pluralité d'antennes à onde progressive (310-312), dans lequel chaque antenne à onde progressive comprend une pluralité d'éléments de rayonnement configurés pour être connectés en série les uns aux autres et formant un premier (211) et un deuxième (216) élément d'extrémité, dans lequel chaque premier et deuxième élément d'extrémité est configuré pour être connecté à un premier (222) et à un deuxième (223) port respectif compris dans chaque antenne à onde progressive, et dans lequel chaque antenne à onde progressive est associée à un premier (120, 1L, 2L, 3L) et à un deuxième (150, 1R, 2R, 3R) faisceau d'antenne, chacun de ces faisceaux étant associé à un des ports d'antenne (222, 223), de telle sorte que le premier faisceau est utilisé en accédant au premier port (222) et le deuxième faisceau est utilisé en accédant au deuxième port (223), de sorte que le premier faisceau (120) peut être utilisé pour des transmissions vers et à partir de ladite première unité radio (110), et le deuxième faisceau peut être utilisé pour des transmissions vers et à partir de ladite deuxième unité radio (160).

2. Répéteur selon la revendication 1, l'antenne de répéteur comprenant des éléments d'antenne qui sont créés sur une feuille de matériau électriquement conducteur, l'antenne comprenant en outre un plan de masse espacé des éléments d'antenne au moyen d'un matériau diélectrique.

3. Répéteur selon l'une quelconque des revendications 1 à 2, dans lequel l'antenne de répéteur est une antenne de répéteur passive.

4. Répéteur selon l'une quelconque des revendications 1 à 2, dans lequel l'antenne de répéteur est une antenne de répéteur active.

5. Répéteur selon l'une quelconque des revendications 1 à 4, l'antenne de répéteur (500) comprenant une première pluralité de décaleurs de phase variables (510) disposés entre les éléments de rayonnement de l'antenne de répéteur (500), ainsi qu'une deuxième pluralité de décaleurs de phase variables (520) disposés en rapport avec les ports d'antenne (A, B), la première pluralité de décaleurs de phase (510) étant configurée pour orienter les faisceaux d'antenne dans une première direction, et la deuxième pluralité de décaleurs de phase (520) étant configurée pour orienter les faisceaux d'antenne dans une deuxième direction essentiellement perpendiculaire à la première direction.
